# EUROPEAN PATENT APPLICATION

(11) **EP 4 682 816 A1**
(43) Date of publication of application: **21.01.2026**
(21) Application number: 24189815.4
(22) Date of filing: 19.07.2024
(51) Int. Cl.: G06T 3/4053

(54) **SUPER-RESOLUTION FOR TARGET DETECTION WITHIN SCAN DATA PROVIDED BY A LASER SCANNER**

(71) Applicant: Leica Geosystems AG, 9435 Heerbrugg (CH)
(72) Inventor: WIESNER, Tobias, 9442 Berneck (CH); HERBST, Christoph, A-6850 Dornbirn (AT); SPETTEL, Patrick, A-6932 Langen bei Bregenz (AT)
(74) Representative: Kaminski Harmann

(57) **Abstract**

The invention relates to detecting scan reference markers in scan data for referencing scan data generated from different surveying positions. In particular, the invention pertains to a computer-implemented method for the detection of scan reference markers (2) within scan data provided by a laser scanner (1), wherein the scan reference markers are to be fixedly positioned within a scene and provide for a fixed absolute position reference in said scene. Therefore, the computer-implemented method comprises multiple steps. Firstly, the scan data is provided as a three-dimensional visual representation of a scene. Secondly, a first marker detection algorithm is applied to the scan data configured to identify scan reference marker candidates, wherein for each of the identified scan reference marker candidates a section in the scan data is defined. Further, a resolution enhancement algorithm may be applied to the defined section in the scan data, wherein the resolution enhancement algorithm is configured to obtain a comparably higher resolution of the defined section and provide a high-resolution section of the scan reference marker candidate. Moreover, a second marker detection algorithm is applied to the high-resolution section and the fixed absolute position reference of the scan reference marker is retrieved, based on the result of the second marker detection algorithm.

## Description

### FIELD OF THE INVENTION

The present invention relates to a method for the detection of scan reference markers within scan data provided by a surveying device, in particular a total station, a theodolite or a laser scanner.

### BACKGROUND OF THE INVENTION

A laser scanner collects data about a scene by scanning the scene with a laser and collecting thousands, millions or even billions of points of three-dimensional position information associated with the scene. The points and associated information may be saved as point data, which may be collected as a "point cloud." In some embodiments, the points may be collected so densely that the associated point data may be used to effectively re-create the scene scanned by the laser scanner. The scene might also be referred to as a setting. Many laser scanners also include one or more cameras that are configured to take pictures of the scene such that one or more images of the scene may be generated. The images and associated image data may be combined with and mapped to the points of the point data to generate a more complete recreation of the scene than if only images or point data were used. The points and associated point data and/or the images and associated image data taken by a laser scanner at a particular position may be referred to as a scan. Additionally, the point data and image data in a scan may be referred to as scan data. In the present disclosure, the terms "images" and "image data" may be used interchangeably at times as well as the terms "points" and "point data." In some embodiments, the laser scanner may be configured to generate the images based on information included in the point cloud as measured by the laser of the laser scanner instead of images taken by one or more cameras. For example, the images may be generated based on point intensity or point colours of the points as recorded by the laser and included in the point data.

Laser scanning is used to survey many different settings such as construction sites, historical buildings, industrial facilities or any other applicable setting. Many times, multiple scans are taken of a setting at multiple locations and the multiple scans are combined in order to obtain a full three-dimensional (3D) visual representation of the setting. The combination of scans often includes determining the relative position of a location of the setting in one of the scans with respect to the position of the same location of the setting in another scan, which may be referred to as "scan registration".

Scan registration between different scans may include determining a first viewpoint of a scene or setting based on first point data of the scene. A first scan may include information about the scene as taken by a first laser scanner at a first location and the first point data may indicate a 3D geometry of the scene. A method may further include determining a second viewpoint of the setting based on second point data of the scene. A second scan may include information about the setting as taken by a second laser scanner at a second location and the second point data may indicate the 3D geometry of the scene. The method may further include generating a first rectified image based on the first viewpoint and generating a second rectified image based on the second viewpoint. Additionally, the method may include determining a registration between the first scan and the second scan based on the first viewpoint and the second viewpoint.

For a registration of a plurality of viewpoints, absolute position references must be identified in the scan data. In order to determine an absolute position reference, it is common practice to fixedly position so-called position reference markers within the scene that is to be scanned. These absolute position references might then be used as absolute position references in the three-dimensional visual representation of the scene to combine the plurality of viewpoints. Even though scan reference markers generally might be of an arbitrary shape or design, in surveying applications common markers comprise circle targets, Secchi disks, or so-called ARTags, such as ArUco markers.

Existing methods might utilize conventional template matching algorithms for the detection of scan reference markers in scan data. Alternatively, some might utilize existing Al-based object detection algorithms. However, existing methods of both approaches require images or intensity data with sufficiently high resolution for a reliable detection of targets.

The quality of the scan data and accordingly the detection accuracy might depend on various factors. For instance, in the case of image-based detection, lighting conditions greatly influence the scanning process of a target area. For laser-based scanning, the resolution of a scan is a crucial factor as it limits the maximum range of detectable targets. However, a high-resolution scan might require relatively long scan times. Consequently, when conducting a measuring campaign with high-resolution scans, e.g. within the scope of a construction site, the costs increase accordingly. Moreover, even for long scan times the highest achievable resolution is limited by the device.

### OBJECT OF THE INVENTION

In view of the above circumstances, the object of the present invention is to provide an improved method for the detection of scan reference markers in scan data.

This objective is achieved by realizing the characterizing features of the independent claims. Features, which further develop the invention in an alternative or advantageous manner are described in the dependent patent claims.

### SUMMARY OF THE INVENTION

A first aspect of the invention pertains to a computer-implemented method for the detection of scan reference markers within scan data provided by a laser scanner, the scan reference markers to be fixedly positioned within a scene and providing for a fixed absolute position reference in said scene. The method comprises providing the scan data as a three-dimensional visual representation of a scene. The method further comprises applying a first marker detection algorithm to the scan data configured to identify scan reference marker candidates, wherein for each of the identified scan reference marker candidates a section in the scan data is defined. The method further comprises applying a resolution enhancement algorithm to the defined section in the scan data, the resolution enhancement algorithm being configured to obtain a comparably higher resolution of the defined section and provide a high-resolution section of the scan reference marker candidate. The method further comprises applying a second marker detection algorithm to the high-resolution section and retrieving, based on the result of the second marker detection algorithm, the fixed absolute position reference of the scan reference marker.

Resolution enhancement refers to techniques that increase the resolution of an image. A variety of existing resolution enhancement approaches might be utilized within the scope of the invention. By means of example, resolution enhancement might comprise image upscaling algorithms and super resolution algorithms.

Image upscaling refers to the process of resizing an image or increasing the resolution of an image, whereas it does not necessarily postulate an increase in the image quality as well. In other words, an image-upscaling algorithm might produce an image that comprises more pixels but with the same level of detail. Alternatively, super-resolution is intended to enhance the resolution of an image. In other words, a superresolution algorithm is intended to increase the quality of an input image. However, it is noted that an image which is perceived by a human to be of better quality does not necessarily mean that target detection algorithms that are applied to it also provide better results. In other words, resolution enhancement algorithms, particularly super resolution algorithms, might produce images that might not be perceived as "better" but might still result in a better detection of the scan reference markers. In certain cases, an image that is perceived to be of worse quality than a previous version might provide better results in algorithms such as target detection algorithms. By means of example, a blurry image might be preferable to an image with sharp edges. Both, image upscaling and super-resolution algorithms might be based on machine learning paradigms.

Resolution enhancement approaches might be utilized to increase or enhance the resolution of the scan data which might allow for a better detection of scan reference markers and thus enabling the detection at longer distances. Depending on the utilized algorithm, the detection might also be more reliable or more robust. Alternatively, capturing a scene at a lower resolution might be sufficient due to the subsequent resolution enhancement of the scan data. Therefore, the present invention might also allow to reduce the necessary time for scanning processes. Consequently, the necessary time and therefore also the costs of scanning campaigns can be greatly reduced, as scanning distances might be increased and/or scanning times decreased.

In a further embodiment, the laser scanner is a terrestrial laser scanner that captures a three-dimensional scene by pointwise distance measurements using a laser.

In a further embodiment, the scan data comprises an intensity image, wherein the intensity image relates to pointwise reflected measurement radiation intensity. For example, such reflected measurement radiation intensity might be returning radiation emitted by a laser emitter of the laser scanner for providing the 3D measurement. Moreover, the first marker detection algorithm is applied to the intensity images.

In a further embodiment, the scan data comprises images, for example images that are provided by a camera of the laser scanner. In particular comprising colour images, more particularly wherein the colour images comprise RGB colour images. Moreover, the first marker detection algorithm is applied to the colour images.

In a further embodiment, the resolution enhancement algorithm is selected from a subset of resolution enhancement algorithms that contain geometry-preserving properties.

Geometry-preserving algorithms describe a subset of algorithms that do not distort geometrical proportions and relations. The geometrical preservation might especially be of importance for applications that require a precise determination of a position. In the case of the present invention, a plurality of algorithms might be applied in sequence and thus the geometry preserving features are required such that there is no distortion between the provided input to the result.

As a resolution enhancement algorithm might be followed by a marker detection algorithm that might be based on geometrical approaches, the accuracy of the marker detection algorithm directly depends on the geometry-preserving properties of the resolution enhancement algorithm. By means of example, the centre of a Secchi disk might be detected by localizing the intersection of two crossing lines determined by an edge detection based on the intensity gradients of the black and white quarters of the disk. If these intensity gradients were to be altered by the resolution enhancement algorithm, the localization as well as the resulting position of the centre might be inaccurate.

Moreover, resolution enhancement algorithms, as well as marker detection algorithms might not be restricted to approaches that are based on a raster, as they are commonly used to operate on raster graphics images or rasterized data. By means of example, the marker detection algorithms and thus the determined location might not be restricted to pixel precision, such as the centre of a pixel in a pixel grid of a digital image.

In a further embodiment, the first marker detection algorithm and the second marker detection algorithm comprising image processing and pattern recognition techniques, in particular wherein the first and the second marker detection algorithm are the same.

In a further embodiment, the first and second marker detection algorithm comprise a template matching algorithm or an object detection algorithm based on machine learning.

Template matching is a common approach in image processing for identifying a section of an image that matches a predefined pattern. Existing template matching algorithms may vary in complexity. Naive algorithms might just match certain shapes whereas more sophisticated algorithms might comprise more complex statistical concepts. By means of example, one such template might comprise the shape and colouring of a Secchi disk, i.e. a circular disk with alternating black and white quadrants.

Machine-learning based object detection or pattern recognition algorithms might be utilized for the detection of scan reference markers as well. Various such algorithms exist and might be used in the scope of the claimed invention.

In a further embodiment, the scan reference marker comprising one or more fixed absolute position reference points.

In a further embodiment, the scan reference markers comprise ArUco markers and black and white markers, particularly Secchi discs, checker-board patterns, or circle targets.

An ArUco markers and other so-called ARTags are fiducial markers that are commonly used for 3D registration and pose tracking in applications such as augmented reality. Note that the present invention also pertains to other ARTags. ArUco markers typically comprise a 7-by-7 binary grid surrounded by a black frame. However, the same principles apply to other grid sizes as well. ArUco markers can be used to determine a location and an orientation in three-dimensional space. An original Secchi disc is a white disk of a specific diameter. The more commonly used version is modified to comprise alternating black and white quarters and can be used in a variety of diameters. Such physical markers are usually positioned manually, for example by applying a sticker to a corresponding location or by modifying the surface of an object.

In a further embodiment, the resolution enhancement algorithm comprising an image upscaling algorithm configured to increase image resolution, or a super-resolution algorithm configured to enhance image resolution.

In a further embodiment, the resolution enhancement algorithm and the second marker detection algorithm are performed repeatedly.

In a further embodiment, after verifying the marker candidate, instructions to perform an additional scan of the section are generated, wherein the instructions comprise manual instructions for a human operator or processing instructions for a scanning device.

A second aspect of the invention pertains to a computer program comprising instructions which, when the program is executed by a computer, cause the computer to carry out the method according to the first aspect of the invention.

A third aspect of the invention pertains to a computer-readable data carrier having stored thereon the computer program according to the second aspect of the invention or a data carrier signal carrying the computer program according to the second aspect of the invention.

### BRIEF DESCRIPTION OF THE DRAWINGS

By way of example only, specific embodiments of the invention will be described more fully hereinafter with reference to the accompanying figures, wherein:
Figure 1 shows a scanning device in a scene that comprises a plurality of scan reference markers.
Figure 2a and 2b show examples of scan reference markers, in particular a Secchi Disk (2a) and an ArUco marker (2b).
Figure 3 shows a comparison of different image enhancement algorithms.

### SPECIFIC EMBODIMENTS OF THE INVENTION

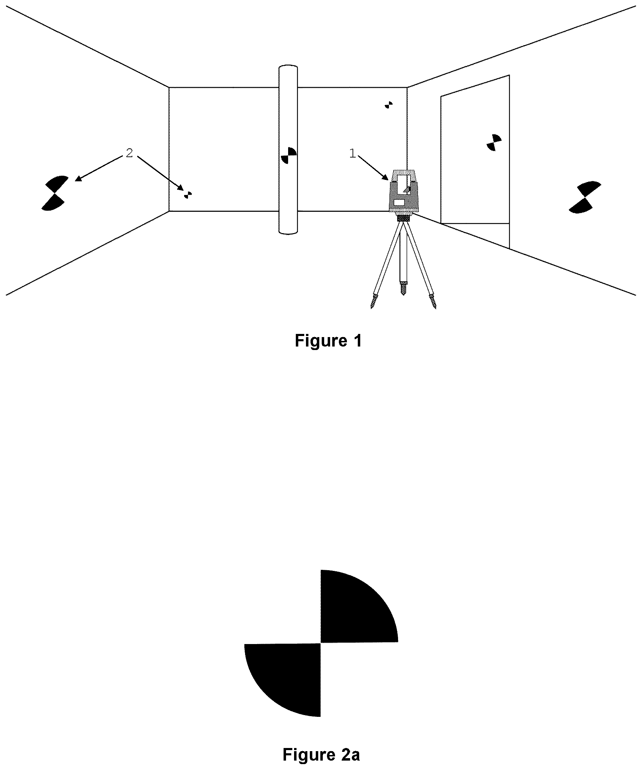

Figure 1 shows a laser scanner (1) in a scene that comprises a plurality of scan reference markers (2). The markers are fixedly positioned in the target scene. In some embodiments, the scanning device might comprise a laser scanner that produces an intensity image of the scene. In other embodiments, the scanning device might comprise an imaging device, such as a camera that produces images, particularly RGB colour images.

Said images are then provided as a three-dimensional visual representation of a scene that is used for the detection of scan reference markers. According to the present invention, scan reference marker candidates are identified by a first marker detection algorithm and for each candidate a section in the scan data might be defined. Next, a resolution enhancement algorithm is applied to the section in order to achieve a high-resolution section. Next, a second marker detection algorithm is applied to the high-resolution section in order to retrieve the fixed absolute position reference of the scan reference marker.

Figure 2a shows an example of a Secchi disk as it might be utilized as a scan reference marker in a scene. The scan reference markers are to be fixedly positioned in the scene in order to function as a fixed absolute position reference.

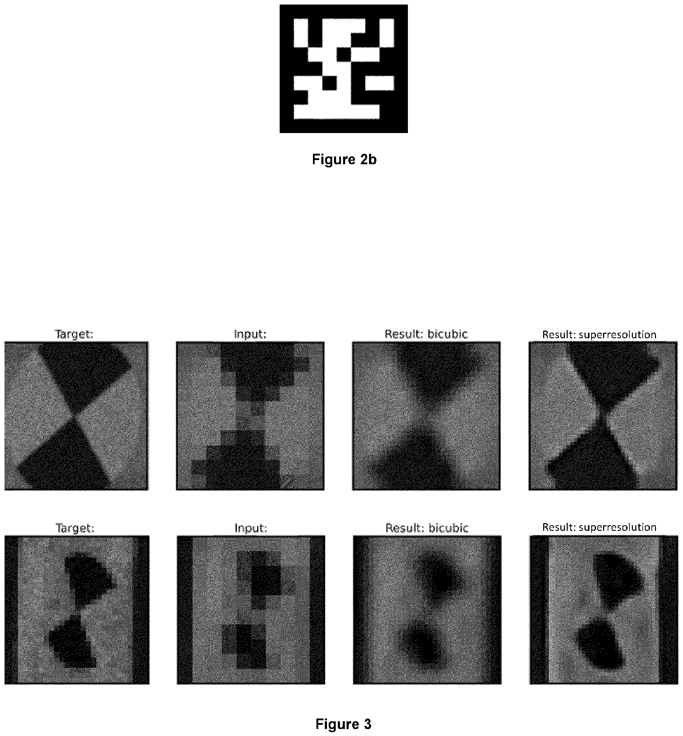

Figure 2b shows an example of an ArUco marker as it might be utilized in a scene as a scan reference marker that serves to indicate a fixed absolute position in said scene. ArUco markers might also be used to indicated additional information besides the position. Additional information such as the orientation of the marker might also be perceived. Further, the binary pattern of the ArUco marker might be used to identify individual markers such that further information can be conveyed.

Figure 3 shows two examples of intensity images of a scan reference marker at different resolutions. The "input" column illustrates an image of a scan reference marker at a relatively low resolution, as it might be captured by a conventional imaging device. The "Target" column shows the same scan reference marker in a relatively good resolution, as it might be desired to be produced by the claimed invention. "Result: Bicubic" depicts an enhanced image after applying bicubic interpolation to the "input" image. "Result: superresolution" depicts an enhanced image after applying an Al-based superresolution algorithm as it might be comprised by the first aspect of the invention.

As can be seen in the bottom row, the result of the superresolution algorithm might not only be perceived to be of better quality than the input image, but also of better quality than the desired target image.

Although the invention is illustrated above, partly with reference to some specific embodiments, it must be understood that numerous modifications and combinations of different features of the embodiments can be made. All of these modifications lie within the scope of the appended claims.

## Claims

1. Computer-implemented method for the detection of scan reference markers (2) within scan data provided by a laser scanner (1), the scan reference markers to be fixedly positioned within a scene and providing for a fixed absolute position reference in said scene, the method comprising,
- providing the scan data as a three-dimensional visual representation of a scene;
- applying a first marker detection algorithm to the scan data configured to identify scan reference marker candidates, wherein for each of the identified scan reference marker candidates a section in the scan data is defined;
- applying a resolution enhancement algorithm to the defined section in the scan data, the resolution enhancement algorithm being configured to obtain a comparably higher resolution of the defined section and provide a high-resolution section of the scan reference marker candidate;
- applying a second marker detection algorithm to the high-resolution section and retrieving, based on the result of the second marker detection algorithm, the fixed absolute position reference of the scan reference marker.

2. Method according to claims 1,
**characterised by**
the laser scanner being a terrestrial laser scanner, capturing a three-dimensional scene by pointwise distance measurements using a laser.

3. Method according to any of the preceding claims,
**characterised by**
the scan data comprising an intensity image, wherein the intensity image relates to pointwise reflected measurement radiation intensity;
and the first marker detection algorithm being applied to the intensity images.

4. Method according to any of the preceding claims,
**characterised by**
the scan data comprising images, in particular colour images, more particularly wherein the colour images comprise RGB colour images; and the first marker detection algorithm being applied to the colour images.

5. Method according to any of the preceding claims,
**characterised by**
the resolution enhancement algorithm being selected from a subset of resolution enhancement algorithms that contain geometry-preserving properties.

6. Method according to any of the preceding claims **characterised by**
the first marker detection algorithm and the second marker detection algorithm comprising image processing and pattern recognition techniques, in particular wherein the first and the second marker detection algorithm are the same.

7. Method according to claim 6, wherein
the first and second marker detection algorithm comprise a template matching algorithm or an object detection algorithm based on machine learning.

8. Method according to any of the preceding claims,
**characterised by**
the scan reference marker comprising one or more fixed absolute position reference points.

9. Method according to any of the preceding claims,
**characterised by**
the scan reference markers comprising ArUco markers and black and white markers, in particular Secchi discs, checker-board patterns, or circle targets.

10. Method according to any of the preceding claims,
**characterised by**
the resolution enhancement algorithm comprising an image upscaling algorithm configured to increase image resolution, or a super-resolution algorithm configured to enhance image resolution.

11. Method according to any of the preceding claims,
**characterised by**
repeatedly performing the resolution enhancement algorithm and the second marker detection algorithm.

12. Method according to any of the preceding claims,
**characterised by**
after verifying the marker candidate, generating instructions to perform an additional scan of the section, wherein the instructions comprise manual instructions for a human operator or processing instructions for a scanning device.

13. A computer program comprising instructions which, when the program is executed by a computer, cause the computer to carry out the method of one of claims 1 to 12.

14. A computer-readable data carrier having stored thereon the computer
program of claim 13 or a data carrier signal carrying the computer program of claim 13.
